Europäisches Patentamt

(19) European Patent Office

Office européen des brevets

(11) Veröffentlichungsnummer: **0 037 853**
**B1**

(12) # EUROPÄISCHE PATENTSCHRIFT

(45) Veröffentlichungstag der Patentschrift:
14.05.86

(51) Int. Cl.⁴: **B 60 T 13/68**

(21) Anmeldenummer: **80107807.2**

(22) Anmeldetag: **11.12.80**

(54) **Elektronischer Sollwertgeber für elektro-pneumatische Bremsanlagen von Schienenfahrzeugen.**

(30) Priorität: **12.02.80 DE 3005136**

(43) Veröffentlichungstag der Anmeldung:
**21.10.81 Patentblatt 81/42**

(45) Bekanntmachung des Hinweises auf die Patenterteilung:
**14.05.86 Patentblatt 86/20**

(84) Benannte Vertragsstaaten:
**AT CH DE FR GB LI SE**

(56) Entgegenhaltungen:
**FR - A - 1 221 054**
**FR - A - 1 340 249**
**FR - A - 2 358 303**
**US - A - 3 814 484**

(73) Patentinhaber: **KNORR-BREMSE AG, Moosacher Strasse 80 Postfach 401060, D-8000 München 40 (DE)**
Patentinhaber: **Siemens Aktiengesellschaft, Berlin und München Wittelsbacherplatz 2, D-8000 München 2 (DE)**

(72) Erfinder: **Gerum, Eduard, Dr., Strassbergerstrasse 32, D-8000 München 40 (DE)**
Erfinder: **Kessel, Gerd, Dr., Parksiedlung 8, D-8031 Geiselbullach (DE)**
Erfinder: **Gotthardt, Klaus-Jürgen, Auracher Strasse 10, D-8521 Untermembach (DE)**
Erfinder: **Lichtenstein, Lothar, Ebnerstrasse 13, D-8520 Erlangen (DE)**

## Beschreibung

Die Erfindung bezieht sich auf einen elektronischen Sollwertgeber für elektro-pneumatische Bremsanlagen von Schienenfahrzeugen gemäss dem Oberbegriff des Patentanspruches 1. Ein derartiger Sollwertgeber ist aus der DE-A-2 552 489 bekannt.

Bei pneumatischen bzw. elektro-pneumatischen Bremsen von Schienenfahrzeugen, bei denen eine Bremsung über eine Druckabsenkung der sogenannten Hauptluftleitung erfolgt, wird üblicherweise mittels eines Führerbremsventils und/oder eines Spannungsdruckwandlers der Druck in der Hauptluftleitung gesteuert. Der Druck in der Hauptluftleitung, welche die zu einem Zug gekuppelten Fahrzeuge durchzieht, steuert seinerseits Bremssteuerventile, die einen der Druckabsenkung in der Hauptluftleitung im wesentlichen umgekehrt proportionalen Vorsteuerdruck (Cv-Druck) erstellen, der in seltenen Fällen unmittelbar zum Beaufschlagen eines Bremszylinders, zumeist jedoch zum Steuern eines gegebenenfalls als Druckübersetzer ausgebildeten Relaisventils dient, dessen Ausgangsdruck als Bremsdruck dem Bremszylinder zugeführt wird. Bei den elektro-pneumatischen Bremsen wird der Vorsteuerdruck (Cv-Druck) z.B. der Lok bzw. Bremsdruck zum den Hauptluftleitungsdruck steuernden Gerät zurückgeführt, um dort einen Vergleich von Soll- und Istwert für die Bremsungen und evtl. erforderliche Korrekturen für die Einsteuerung des Hauptluftleitungsdruckes zu ermöglichen.

Die heute üblichen Bremssteuerventile mit Relaisventil verwenden einen Referenzdruck (A-Druck) in einer sogenannten A-Kammer. Der Vorsteuer- bzw. Bremsdruck, also wirksame Druck zur Beeinflussung der Bremse, entspricht hierbei im wesentlichen dem Differenzdruck zwischen der A-Kammer und der Hauptluftleitung. Die bei gelösten Bremsen mit der Hauptluftleitung in Verbindung stehende A-Kammer wird von der Hauptluftleitung abgeschlossen, wenn dieser Differenzdruck grösser als ein bestimmter Wert (in der Praxis etwa $^3/_{10}$ bar) ist.

Wird der Hauptluftleitungsdruck gegenüber dem Referenzdruck (A-Druck) um einen Betrag abgesenkt, der geringer ist als es dem vorerwähnten, bestimmten Wert des Differenzdruckes entspricht, so bleibt die A-Kammer offen und passt ihren Druck an die Hauptluftleitung an, was zu einer Druckabsenkung in der A-Kammer führt. Ist der Referenzdruck (A-Druck) abgesenkt, kann sich kein Differenzdruck zum Druck in der Hauptluftleitung mehr bilden und die Bremse spricht nicht mehr an, d.h. die Bremse ist «erschöpft». Es ist ersichtlich, dass dieser Zustand dann auftritt, wenn mit sehr geringer Bremsstufe für gewisse Zeit gebremst bzw. die Bremsung aufeinanderfolgend um jeweils nur sehr geringe Bremsstufen zu verstärken versucht wurde. Ein erneuter Druckaufbau der A-Kammer kann nur über vollständiges «Lösen» der Bremse erfolgen, was bis zu 5 Minuten dauern kann.

Bei bisherigen pneumatischen Bremsen wurde das Problem der Druckabsenkung der A-Kammer dadurch gelöst, dass die erste Bremsstufe durch eine Rasterung am Führerbremshebel so festgelegt war, dass durch entsprechendes, anfängliches Absenken des Hauptluftleitungsdruckes um einen Mindestwert ein Differenzdruck zwischen Hauptluftleitungsdruck und A-Druck auftrat, bei dem die A-Kammer mit Sicherheit abgeschlossen wurde. Durch Fehlbedienungen konnten jedoch auch Zwischenstellungen des Führerbremshebels für längere Zeit eingestellt werden, so dass dann das oben geschilderte Problem auftrat. Zum Vermeiden der Fehlbedienungen sind bei diesen Bremsen auch eine Absenkung des Druckes in der Hauptluftleitung zu Bremsbeginn um einen bestimmten Druckwert sicherstellende, selbsttätige Ventile bekannt (DE-A-2 454 368, DE-A-2 552 489).

Bisher intern bekannte elektronische Bremssteuerungen mit elektronischem Sollwertgeber regelten den Vorsteuerdruck (Cv-Druck) kontinuierlich, d.h. auch bis nahe dem Wert Null, so dass die oben geschilderte Gefahr des Bremssystemausfalles besteht. Dabei ist es möglich, dass die elektronische Bremssteuerung den Hauptluftleitungsdruck steuert, der seinerseits über die Bremssteuerventile den Vorsteuer-(Cv-) bzw. Bremsdruck entsprechend steuert, wobei ein dem Hauptluftleitungs- oder aber dem Vorsteuer-(Cv-) bzw. Bremsdruck entsprechendes Signal zum Soll-Istwertvergleich zum elektronischen Bremssteuergerät zurückgeführt wird. Es ist aber auch möglich, dass hierbei die elektronische Bremssteuerung unmittelbar den Vorsteuerdruck (Cv) steuert, während der Hauptluftleitungsdruck von anderen Einrichtungen während Bremsungen abgesenkt wird.

Aufgabe der vorliegenden Erfindung ist es, einen elektronischen Sollwertgeber der eingangs genannten Art zu schaffen, bei dem ein Druckabfall z.B. der A-Kammer mit Sicherheit vermieden wird.

Diese Aufgabe wird durch die im kennzeichnenden Teil des Patentanspruches 1 angegebenen Merkmale gelöst. Vorteilhafte Ausgestaltungen und Weiterbildungen der Erfindung sind in den Unteransprüchen angegeben.

Mit den im Patentanspruch 1 angegebenen Merkmalen wird erreicht, dass der Vorsteuerdruck nicht in dem «kritischen Bereich» liegen kann, der zu einem Entlüften der A-Kammer führt.

Um ein häufiges Schalten in der Nähe der Schaltschwelle zu vermeiden, wurde ein weiterer fest vorgegebener Schwellwert (CVAN, Ansprungwert) gewählt, wobei der Sollwert des Sollwertgebers auf Null gesetzt wird, wenn dieser fest vorgegebene Wert unterschritten ist, dagegen auf den ersten fest vorgegebenen Wert (CV4) gesetzt wird, wenn der vorgegebene Sollwert zwischen den beiden festen Werten (CVAN bzw. CV4) liegt. Liegt dagegen der vorgegebene Sollwert über dem fest vorgegebenen Wert, der etwa dem kritischen Wert für das Abschliessen der A-Kammer entspricht, so wird er unverändert der weiteren Bremsanlage zugeführt.

Der im Anspruch 4 angegebene Funktionsgeber bildet auf elektronischem Wege das sogenannte «Beschleunigungsverhalten» bzw. «Übersteuerungsverhalten» der herkömmlichen Relaisventile nach, bei denen der anfängliche Sollwert unabhängig von der gewählten Bremsstufe für eine gewisse Zeitdauer auf relativ hohe Werte (z.B. 1 bar) gesetzt wird und dann nach Ablauf dieser Zeitdauer den voreingestellten Wert annimmt.

In den weiteren abhängigen Ansprüchen sind einzelne schaltungstechnische Konfigurationen beschrieben, die sich im störanfälligen Betrieb bei Schienenfahrzeugen besonders bewährt haben.

Im folgenden wird die Erfindung anhand eines Ausführungsbeispieles im Zusammenhang mit den Figuren ausführlicher beschrieben.

Es zeigt:

Fig 1 ein Blockschaltbild des erfindungsgemässen elektro-Sollwertgebers;

Fig. 2 ein detaillierteres Blockschaltbild ähnlich der Fig. 1;

Fig. 3a ein Diagramm des von dem elektronischen Sollwertgeber ausgegebenen Sollwertes bei kontinuierlicher zeitlicher Absenkung des vorgegebenen Sollwertes;

Fig. 3b ein Diagramm des von dem elektronischen Sollwertgeber ausgegebenen Sollwertes in Abhängigkeit von dem vorgegebenen Sollwert;

Fig. 4 ein detailliertes Schaltbild eines Ausführungsbeispieles des elektronischen Sollwertgebers nach der Erfindung;

Fig. 5 ein Zeitdiagramm einzelner Signale des elektronischen Sollwertgebers der Fig. 4.

Gleiche Teile in den einzelnen Figuren sind mit gleichen Bezugszeichen versehen.

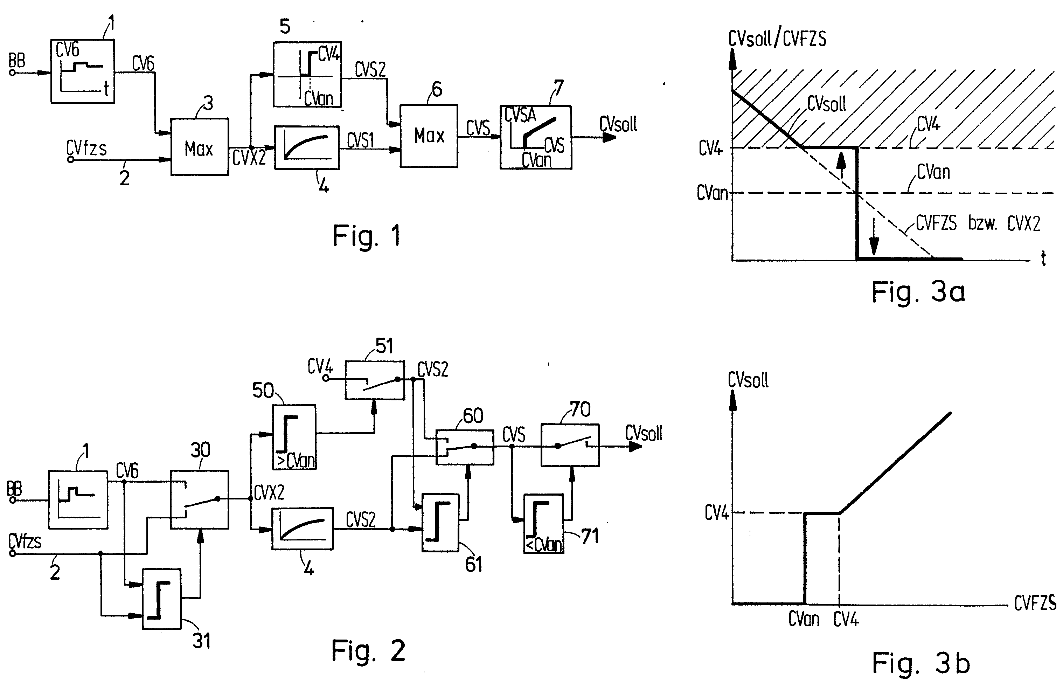

In Fig. 1 ist ein Funktionsgeber 1 gezeigt, der an seinem Eingang ein Bremsbefehlsignal BB empfängt, das anzeigt, dass eine Bremsanforderung vorhanden ist. Der Funktionsgeber 1 erzeugt ein zeitlich veränderbares Signal CV6, das nach einer gewissen Zeit (beispielsweise 5 sec) abgeschaltet wird. Ein möglicher zeitlicher Verlauf dieses Signales ist in dem Block 1 schematisch dargestellt. Ein elektrisches Sollwertsignal für den Vorsteuerdruck CV, d.h., das Signal CVFZS, das beispielsweise aus einer automatischen Fahr- und Bremssteuerung (AFB) stammt, wird über eine Leitung 2 einem Eingang eines Maximalauswahlschaltkreises 3 zugeführt, dessen anderem Eingang das Signal CV6 aus dem Funktionsgeber 1 zugeführt wird. Am Ausgang des Maximalauswahlschaltkreises 3 erscheint ein Signal CVX2, welches das grössere der beiden Signale CVFZS bzw. CV6 ist. Der Ausgang des Maximalauswahlschaltkreises 3 wird einem Regler 4 und einem Schwellwertschalter 5 zugeführt. Der Regler 4 beeinflusst das Zeitverhalten des Regelkreises und ist in bekannter Weise an das Zeitverhalten der Regelstrecke angepasst. Am Ausgang des Reglers 4 erscheint ein erstes Sollwertsignal CVS1.

Der dem Regler 4 parallel geschaltete Schwellwertschalter 5 überprüft das Eingangssignal CVX2 mit einem vorgegebenen Schwellwert CVAN (Ansprungwert für den $C_v$-Druck) und gibt an seinem Ausgang ein zweites Sollwertsignal CVS2 ab. Dieses Signal hat den Wert Null, wenn das Signal CVX2 kleiner als CVAN ist und es hat einen fest vorgegebenen Wert CV4, wenn das Signal CVX2 grösser als CVAN ist. Die beiden Sollwertsignale CVS1 und CVS2 werden einem zweiten Maximalauswahlschaltkreis 6 zugeführt, an dessen Ausgang das grössere der beiden Eingangssignale CVS1 bzw. CVS2 erscheint, das mit CVS bezeichnet ist. Das Signal CVS wird einem weiteren Schwellwertschaltkreis 7 zugeführt. In diesem Schaltkreis 7 wird überprüft, ob das Signal CVS kleiner oder grösser als das fest vorgegebene Signal CVAN ist. Ist CVS kleiner als CVAN, so erscheint am Ausgang des Schaltkreises 7 ein Signal der Grösse Null. Ist CVS grösser als CVAN, so erscheint am Ausgang des Schaltkreises 7 das Signal CVS. Das Ausgangssignal des Schaltkreises 7 stellt den Sollwert $CV_{soll}$ für den Vorsteuerdruck CV dar und wird den weiteren Komponenten des Bremskraftregelkreises zugeführt. Diese weiteren Komponenten sind nicht Gegenstand der vorliegenden Erfindung und können von jedem Fachmann der Regelungstechnik in bekannter Weise aufgebaut werden.

In Fig. 2 sind die Maximalauswahlschaltkreise 3 und 6 sowie die Schwellwertschalter 5 und 7 der Fig. 1 detaillierter dargestellt, wobei ansonsten die Wirkungsweise und Anordnung der einzelnen Bauteile denen der Fig. 1 entspricht. Der Maximalauswahlschaltkreis 3 der Fig. 1 ist in Fig. 2 aus einem Umschalter 30 und einem Komparator 31 aufgebaut. Der Umschalter 30 und Komparator 31 besitzen jeweils zwei Eingänge, denen die Signale CV6 und CVFZS zugeführt werden. Der Ausgang des Komparators 31 ist mit einem Steuereingang des Umschalters 30 verbunden. Wenn das Signal CV6 grösser ist als das Signal CVFZS, so erscheint am Ausgang des Komparators 31 ein Signal, das den Umschalter 30 so steuert, dass sein Ausgang das Signal CV6 führt. Ist das Signal CVFZS grösser als das Signal CV6, so wird der Umschalter 30 entsprechend umgeschaltet, so dass an seinem Ausgang das Signal CVFZS ansteht.

Der Schwellwertschalter 5 der Fig. 1 besteht gemäss Fig. 2 aus einem Komparator 50 und einem Schalter 51. Der Eingang des Komparators 50 empfängt das Signal CVX2 von dem Umschalter 30 und vergleicht dieses Signal mit einem fest vorgegebenen Wert CVAN (Ansprungwert). Der Ausgang des Komparators 50 ist mit einem Steuereingang des Schalters 51 verbunden, dessen Eingang der fest vorgegebene Wert CV4 zugeführt wird. Ist das Signal CVX2 grösser als das Signal CVAN, so wird der Schalter 51 so gesteuert, dass sein Ausgangssignal CVS2 den Wert CV4 annimmt. Ist das Signal CVX2 kleiner als CVAN, so ist der Schalter 51 geöffnet und sein Ausgangssignal CVS2 nimmt den Wert Null an.

Der Maximalauswahlschaltkreis 6 der Fig. 1 besteht aus einem Umschalter 60 und einem Komparator 61, die in gleicher Weise verschaltet sind wie der Umschalter 30 und der Komparator 31, so dass das Ausgangssignal CVS des Umschalters 60 der grössere Wert der Eingangssignale CVS1 und CVS2 ist.

Der Schwellwertschalter 7 der Fig. 1 besteht aus einem Schalter 70 und einem Komparator 71. Der Komparator 71 vergleicht das Eingangssignal CVS mit dem fest vorgegebenen Wert CVAN und schaltet den Schalter 70 entsprechend diesem Vergleich so, dass das Ausgangssignal $CV_{soll}$ des Schalters 70 den Wert des Eingangssignales CVS annimmt, wenn CVS grösser ist als CVAN. Ist CVS kleiner als CVAN, so ist der Schalter 70 geöffnet und das Ausgangssignal $CV_{soll}$ nimmt den Wert Null an.

Aus Fig. 3a ist zu ersehen, dass der Wert $CV_{soll}$ nur den schraffierten Bereich (d.h. grösser CV4) bzw. den Wert Null annehmen kann. Liegt der voreingestellte Sollwert CVFZS bzw. CVX2 im Bereich zwischen CVAN und CV4, so wird $CV_{soll}$ auf CV4 gesetzt. Liegt er dagegen zwischen Null und CVAN, so wird $CV_{soll}$ auch auf Null gesetzt. Ist er grösser als CV4, so bleibt er unverändert, was durch den schraffierten Bereich der Fig. 3a angedeutet ist. Durch den Wert CVAN wird somit ein definiertes Hystereseverhalten geschaffen. Dies ist insbesondere dann von Vorteil, wenn während eines Bremsvorganges der Bremsdruck (und damit der Sollwert) herabgesetzt werden soll, ohne dass ein zu häufiges Schalten auftritt. Der Wert von CV4 wird so gewählt, dass der Differenzdruck zwischen Hauptluftleitung und A-Kammer so gross ist, dass die A-Kammer mit Sicherheit abgeschlossen wird. In der Praxis liegt dieser Wert etwa bei 0,3 bar. Der Wert von CVAN liegt zwischen Null und CV4 und wird entsprechend einer gewünschten Schalthysterese festgelegt.

In einer einfacheren Ausführungsform kann der Wert CVAN auch fortgelassen werden, so dass als Schaltschwelle lediglich der Wert von CV4 dient. Die Regelung würde hierdurch allerdings etwas unruhiger werden.

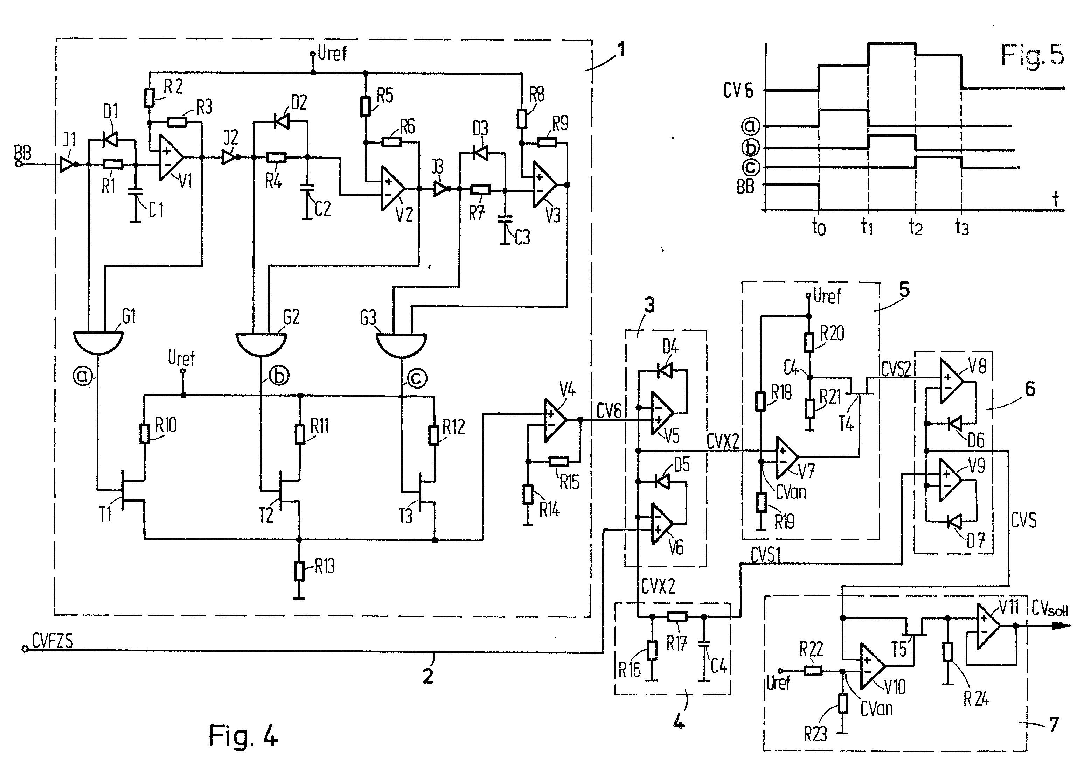

In Fig. 4 ist ein konkretes Schaltbild des elektronischen Bremskraftreglers der Erfindung dargestellt, wobei einzelne Baugruppen zu Blöcken (gestrichelte Linien) entsprechend dem Blockschaltbild der Fig. 1 zusammengefasst sind. Der Funktionsgeber 1 empfängt an seinem Eingang das Bremsbefehlsignal BB, das einem Inverter I1 zugeführt wird. Der Ausgang des Inverters I1 ist mit einem Zeitglied verbunden, das aus einem Widerstand R1, einer hierzu parallel geschalteten Diode D1 und einem Kondensator C1 besteht. Ein Anschluss des Widerstandes R1 und die Kathode der Diode D1 sind mit dem Ausgang des Inverters I1 verbunden, während die anderen Anschlüsse der Diode D1 und des Widerstandes R1 mit einem Anschluss des Kondensators C1 sowie mit einem invertierenden Eingang eines Verstärkers V1 verbunden sind. Der andere Anschluss des Kondensators C1 liegt auf Masse.

Der nicht-invertierende Eingang des Verstärkers V1 ist über einen Widerstand R2 mit Bezugsspannung $+ U_{REF}$ verbunden und über einen Widerstand R3 mit dem Ausgang des Verstärkers 1 rückgekoppelt.

Der verstärkte Ausgang (Ausgang des Verstärkers V1) des ersten Zeitgliedes wird einem zweiten Inverter I2 zugeführt, dessen Ausgang mit einem zweiten Zeitglied verbunden ist. Das zweite Zeitglied ist identisch dem ersten Zeitglied aufgebaut und besteht aus einem Widerstand R4, einer Diode D2, einem Kondensator C2, einem Verstärker V2, einem Rückkopplungswiderstand R6 und einem Widerstand R5.

Der Ausgang des zweiten Zeitgliedes (Ausgang des Verstärkers V2) wird einem dritten Inverter I3 zugeführt, dessen Ausgang mit einem dritten Zeitglied verbunden ist, das identisch den ersten und zweiten Zeitgliedern aufgebaut ist und aus einem Widerstand R7, einer Diode D3, einem Kondensator C3, einem Verstärker V3 sowie Widerständen R8 und R9 besteht.

Einzelne Signale der drei Zeitglieder werden in folgender Weise logischen Gattern G1, G2 und G3 zugeführt. Die logischen Gatter sind hierbei UND-Gatter. Das UND-Gatter G1 empfängt das Ausgangssignal des Inverters I1 und des Verstärkers V1. Entsprechend empfangen die UND-Gatter G2 und G3 die Ausgangssignale des Inverters I2 und des Verstärkers V2 bzw. des Inverters I3 und des Verstärkers V3.

Die Ausgänge der UND-Gatter G1, G2 und G3 sind jeweils mit einer Steuerelektrode eines zugeordneten FET-Schalters T1, T2 bzw. T3 verbunden. Ein Anschluss jedes FET-Schalters T1, T2 und T3 liegt über Widerstände R10, R11 bzw. R12 an der Bezugsspannung $+ U_{REF}$. Die anderen Anschlüsse der FET-Schalter T1 bis T3 liegen gemeinsam über einen Widerstand R13 an Masse. Die gemeinsame Verbindung der FET-Schalter T1, T2 und T3 ist mit dem nicht-invertierten Eingang eines Verstärkers V4 verbunden, dessen negativer Eingang über einen Widerstand R14 mit Masse und über einen Widerstand R15 mit seinem Ausgang verbunden ist. Der Ausgang des Verstärkers V4 stellt den Ausgang des Funktionsgebers 1 dar und führt das Signal CV6.

Der Maximalwertauswahlschaltkreis 3 besteht aus zwei Verstärkern V5 und V6, deren Ausgänge über Dioden D4 bzw. D5 mit den entsprechenden invertierenden Eingängen verbunden sind. Dem nicht-invertierenden Eingang des Verstärkers V5 wird das Signal CV6 (Ausgang des Verstärkers V4) zugeführt, während dem nicht-invertierten Eingang des Verstärkers V6 über die Leitung 2 das Signal CVFZS zugeführt wird. Die mit invertierenden Eingängen der Verstärker V5 und V6 verbundenen Kathoden der Dioden D4 und D5 sind miteinander verbunden, was eine sogenannte hart verdrahtete ODER-Schaltung bildet. Der gemeinsame Verbindungspunkt der Dioden D4 und D5 führt somit das Signal CVX2, das das Ausgangssignal des Maximalwertauswahlschaltkreises 3 darstellt. Dieses Signal wird dem Regler 4 und dem Schwellwertschalter 5 zugeführt.

Der Regler 4 besteht aus einem $\pi$-Vierpol, der aus Widerständen R16 und R17 und einem Kondensator C4 gebildet ist. Ein gemeinsamer Anschluss der Widerstände R16 und R17 bildet den Eingang des Reglers 4, während ein gemeinsamer Verbindungspunkt des anderen Anschlusses des Widerstandes R17 mit dem Kondensator C4 den Ausgang des Reglers bildet, der das Signal CVS1 führt. Die anderen Anschlüsse des Widerstandes R16 und des Kondensators C4 liegen auf Masse. Der Regler R4 ist im vorliegenden Ausführungsbeispiel als Integralregler (I-Regler) ausgebildet, wobei dem Fachmann klar ist, dass je nach Regelstrecke andere Regler zum Einsatz kommen können.

Der Schwellwertschalter 5 enthält einen Verstärker V7, dessen nicht-invertierendem Eingang das Signal CVX2 zugeführt wird. Der invertierende Eingang des Verstärkers V7 liegt an dem Mittelabgriff eines aus Widerständen R18 und R19 gebildeten Spannungsteilers, der zwischen der Bezugsspannung $+ U_{REF}$ und Masse liegt. Die Widerstände R18 und R19 sind so gewählt, dass ihr Mittelabgriff den gewünschten Spannungswert für das Signal CVAN führt. Der Ausgang des Verstärkers V7 ist mit der Steuerelektrode eines FET-Schalters T4 verbunden. Eine Elektrode des FET-Schalters T4 ist mit einem Mittelabgriff eines aus Widerständen R20 und R21 verbundenen Spannungsteilers verbunden. Der Spannungsteiler liegt ebenfalls zwischen der Bezugsspannung $+ U_{REF}$ und Masse. Die Werte der Widerstände R20 und R21 sind so gewählt, dass an ihrem Mittelabgriff der gewünschte Wert CV4 anliegt. Der andere Anschluss des FET-Schalters T4 stellt den Ausgang des Schwellwertschalters 5 dar und führt das Signal CVS2. Dieses Signal wird zusammen mit dem Ausgangssignal CVS1 des Reglers 4 dem Maximalauswahlschaltkreis 6 zugeführt, der in gleicher Weise aufgebaut ist wie der Maximalauswahlschaltkreis 3. Er enthält zwei Verstärker V8 und V9 sowie zwei Dioden D6 und D7. Der gemeinsame Verbindungspunkt der invertierenden Eingänge der Verstärker V8 und V9 sowie der Kathoden der Anoden D6 und D7 bildet den Ausgang des Schaltkreises 6 und führt das Signal CVS. Dieses Signal wird dem Schwellwertschalter 7 zugeführt, dessen Eingang mit dem invertierenden Anschluss eines Verstärkers V10 verbunden ist. Der nicht-invertierende Eingang des Verstärkers V10 ist mit dem Mittelabgriff eines Spannungsteilers verbunden, der aus Widerständen R22 und R23 besteht, die zwischen Bezugsspannung $+ U_{REF}$ und Masse liegt und der an seinem Mittelabgriff den Wert des Signales CVAN führt. Der Ausgang des Verstärkers V10 ist mit der Steuerelektrode eines FET-Schalters T5 verbunden, dessen einer Anschluss mit dem Eingang des Schwellwertschalters 7 verbunden ist und somit das Signal CVS empfängt. Der andere Anschluss des FET-Schalters T5 ist mit dem nicht-invertierenden Anschluss eines Verstärkers V11 verbunden, dessen Ausgang über eine Leitung mit dem invertierenden Eingang des Verstärkers V11 verbunden ist. Der nicht-invertierende Eingang des Verstärkers V11 ist noch über einen Widerstand R24 mit Masse verbunden. Der Ausgang des Verstärkers V11 stellt den Ausgang des Schwellwertschalters 7 dar, der das endgültige Sollwertsignal $CV_{soll}$ führt.

Im folgenden wird die Wirkungsweise des Schaltkreises der Fig. 4 im Zusammenhang mit dem Diagramm der Fig. 5 erläutert.

In Fig. 5 sind das Bremsbefehlsignal BB, die Ausgangssignale der UND-Gatter G1 (a), G2 (b) bzw. G3 (c) dargestellt sowie das Ausgangssignal CV6 des Funktionsgebers 1. Das Signal BB geht zum Zeitpunkt $t_0$ (Bremsanforderung) von hohem auf niedrigen Pegel. Solange es noch auf hohem Pegel ist, ist der Ausgang des Inverters I1 auf niedrigem Pegel, so dass der Ausgang des UND-Gatters G1 auf niedrigem Pegel ist. Der Ausgang des Verstärkers V1 ist aufgrund der Spannung an seinem nicht-invertierendem Eingang auf hohem Pegel. Hierdurch wiederum liegt der Ausgang des Inverters I2 auf niedrigem Pegel, so dass auch das UND-Gatter G2 an seinem Ausgang niedrigen Pegel führt. Entsprechend liegt der Ausgang des Verstärkers V2 auf hohem Pegel und der Ausgang des Inverters I3 auf niedrigem Pegel, so dass auch der Ausgang des UND-Gatters G3 auf niedrigem Pegel ist. Der Ausgang des Verstärkers V3 liegt wiederum auf hohem Pegel.

Solange die Ausgänge der UND-Gatter G1 bis G3 auf niedrigem Pegel sind, sind die FET-Schalter T1 bis T3 gesperrt, so dass der gemeinsame Verbindungspunkt der Anschlüsse der FET-Schalter T1 bis T3 über den Widerstand R13 auf Masse gezogen wird, so dass schliesslich das Ausgangssignal des Verstärkers V4 ebenfalls auf niedrigem Potential ist. Zum Zeitpunkt $t_0$ geht das Signal BB auf Null und der Ausgang des Inverters I1 auf hohen Pegel. Da der Ausgang des Verstärkers V1 noch auf hohem Pegel ist, wird das UND-Gatter G1 umgeschaltet, was den FET-Schalter T1 schliesst, so dass am nicht-invertierten Eingang des Verstärkers V4 eine Spannung anliegt, die durch das Widerstandsverhältnis der Widerstände R10 und R13, die jetzt als Spannungsteiler geschaltet sind, bestimmt ist. Während der Zeitdauer $t_0$–$t_1$ wird der Kondensator C1 über den Widerstand R1 aufgeladen, bis die Kondensatorspannung den Wert der an dem nicht-invertierenden Eingang des Verstärkers V1 über den Spannungsteiler R2, R3 gebildeten Wert erreicht hat. Zu diesem Zeitpunkt ($t_1$) schaltet der Verstärker V1 um, d.h. sein Ausgang geht von dem bisher hohen Pegel auf niedrigen Pegel. Hierdurch wird das Gatter G1 gesperrt und der FET-Schalter T1 geöffnet. Gleichzeitig geht jedoch der Ausgang des Inverters I2 auf hohen Pegel, so dass das UND-Gatter G2 (zusammen mit dem immer noch hohen Pegel des Verstärkers V2) umschaltet, wodurch der FET-Schalter T2 durchschaltet. Somit bilden nun die Widerstände R11 und R13 den wirksamen Spannungsteiler für das Eingangssignal des Verstärkers V4.

Zum Zeitpunkt $t_2$ ist der Kondensator C2 soweit aufgeladen, dass der Verstärker V2 umschaltet. Hierdurch wird das UND-Gatter G2 gesperrt und gleichzeitig das UND-Gatter G3 umgeschaltet, da der Ausgang des Inverters I3 nun auf hohen Pegel geht und der Ausgang des Verstärkers V3 noch auf hohem Pegel ist. Hierdurch wird der FET-Schalter T3 durchgeschaltet, so dass als wirksamer Spannungsteiler für das Eingangssignal des Verstärkers V4 nun die Widerstände R12 und R13 wirken.

Zum Zeitpunkt $t_3$ ist der Kondensator C3 soweit aufgeladen, dass der Verstärker V3 umschaltet, d.h. sein Ausgang geht auf niedrigen Pegel, wodurch das UND-Gatter G3 ausgangsseitig auf niedrigen Pegel geht, was den FET-Schalter T3 sperrt. Damit sind alle drei FET-Schalter T1 bis T3 wieder gesperrt, so dass der Ausgang des Verstärkers V4 wieder auf niedrigem Pegel ist. Die Widerstände R10, R11 und R12 sind zusammen mit dem Widerstand R13 so abgestuft, dass sich das für die jeweiligen Zeitstufen gewünschte Spannungsteilerverhältnis und damit das gewünschte stufenförmige Signal CV6 (Fig. 5) ergibt. Die Zeitkonstanten der RC-Glieder R1, C1; R4, C2; R7, C3 sind so gewählt, dass das gewünschte Zeitverhalten, das einem herkömmlichen Führerbremsventil nachgebildet ist, erreicht wird. Insgesamt wird in dem Funktionsgeber 1 das Beschleunigerverhalten eines Führerbremsventiles nachgebildet, bei dem der Vorsteuerdruck CV bei Bremsbeginn stufenweise bestimmte Werte, die etwa bei 1 bar liegen, einnimmt. Nach Ablauf der Einschaltzeitdauer $(t_0–t_3)$ ist der Funktionsgeber 1 praktisch abgeschaltet, so dass als Sollwert für die weitere Bremsung der Wert CVFZS zur Verfügung steht. Ist während der anfänglichen «Beschleunigerphase» das Signal CVFZS grösser als das «Beschleunigersignal» CV6, so wird in dem Maximalauswahlschaltkreis 3 das Signal CVFZS durchgeschaltet, anderenfalls das Signal CV6. Die Dioden D4 und D5 des Schaltkreises 3 sind in Durchlassrichtung für die verstärkten (Verstärker V5 und V6) Signale CV6 bzw. CVFZS geschaltet, so dass an ihrem gemeinsamen Verbindungspunkt das jeweils grössere Signal die Spannung an dem Verbindungspunkt bestimmt. Dieses Signal (CVX2) wird in dem Verstärker V7 mit der Bezugsspannung CVAN verglichen, wobei in Abhängigkeit von diesem Vergleich der FET-Schalter T4 das Signal C4 oder ein Ausgangssignal von Null als Ausgangssignal CVS2 abgibt. Ist CVX2 grösser als CVAN, so ist der Wert des Signales CVS2 = CV4. Ist dagegen CVX2 kleiner als CVAN, so ist der Wert des Signales CVS2 = Null (vergleiche Fig. 3). In dem Schaltkreis 6 werden die Signale CVS1 und CVS2 in gleicher Weise wie in dem Schaltkreis 3 so verarbeitet, dass das Grössere von ihnen als Ausgangssignal CVS erscheint. Dieses Signal wird in dem Schaltkreis 7 mit dem Bezugswert CVAN verglichen, wobei der FET-Schalter T5 durchschaltet, wenn CVS grösser als CVAN ist. In diesem Falle wird das Signal CVS in dem Verstärker V11 verstärkt und als endgültiger Sollwert $CV_{soll}$ ausgegeben. Ist dagegen CVS kleiner als CVAN so wird der FET-Schalter T5 gesperrt, so dass der nicht-invertierende Eingang des Verstärkers V11 über den Widerstand R24 auf Masse gezogen wird und somit das Ausgangssignal des Verstärkers V11 den Wert Null führt.

Der in den Figuren 1, 2 und 4 dargestellte elektronische Bremskraftregler liefert zusammenfassend ein Sollwertsignal für einen elektro-pneumatischen Bremskraftregelkreis, das während der Einbrems- bzw. «Beschleunigerphase» die bei einem Bremssteuerventil üblichen relativ hohen Werte des Vorsteuerdruckes nachbildet und während des weiteren Bremsverlaufes mit Sicherheit verhindert, dass das Sollwertsignal Werte annimmt, die zu einer Druckabsenkung der sogenannten A-Kammer führen.

**Patentansprüche**

1. Elektronischer Sollwertgeber für elektropneumatische Bremsanlagen von Schienenfahrzeugen, wobei ein vom Fahrzeugführer oder von einer automatischen Fahr- und Bremssteuerung vorgegebener elektrischer Sollwert (CVFZS bzw. CV6) einen Vorsteuerdruck ($C_v$-Druck) der elektropneumatischen Bremsanlage beeinflusst, dadurch gekennzeichnet, dass der vorgegebene Sollwert (CVFZS bzw. CV6) in einem Schwellwertschalter (5, 7) mit einem ersten fest vorgegebenen Wert (CV4) verglichen wird und dass in Abhängigkeit von diesem Vergleich der vorgegebene Sollwert (CVFZS, CV6) der Bremsanlage unverändert zugeführt wird, wenn er grösser als der fest vorgegebene Wert (CV4) ist bzw. auf den Wert Null gesetzt wird, wenn er kleiner als der fest vorgegebene Wert (CV4) ist.

2. Elektronischer Sollwertgeber nach Anspruch 1, dadurch gekennzeichnet, dass der Schwellwertschalter (5, 7) den vorgegebenen Sollwert mit einem zweiten fest vorgegebenen Wert (CVAN) vergleicht, der zwischen Null und dem ersten fest vorgegebenen Wert (CV4) liegt, und dass der vorgegebene Sollwert (CVFZS bzw. CV6)

a) auf den Wert des ersten fest vorgegebenen Wertes (CV4) gesetzt wird, wenn der vorgegebene Sollwert zwischen dem ersten (CV4) und dem zweiten (CVAN) fest vorgegebenen Wert liegt,

b) auf Null gesetzt wird, wenn der vorgegebene Sollwert zwischen Null und dem zweiten fest vorgegebenen Wert (CVAN) liegt, und

c) unverändert bleibt, wenn der vorgegebene Sollwert grösser als der erste fest vorgegebene Wert (CV4) ist.

3. Elektronischer Sollwertgeber nach den Ansprüchen 1 oder 2, dadurch gekennzeichnet, dass der vorgegebene Sollwert (CVFZS bzw. CV6) gleichzeitig einem Regler (4) und einem ersten Schwellwertschalter (5) zugeführt wird, wobei der erste Schwellwertschalter (5) in Abhängigkeit von dem Vergleich die Werte Null oder den des ersten fest vorgegebenen Wertes (CV4) ausgibt, dass die Ausgänge des Reglers (4) und des ersten Schwellwertschalters (5) einem Maximalauswahlschaltkreis (6) zugeführt werden, an dessen Ausgang das grössere der beiden Eingangssignale (CVS2, CVS1) erscheint und dass der Ausgang des Maximalauswahlschaltkreises (6) einem zweiten Schwellwertschalter (7) zugeführt wird, der ein Ausgangssignal ($CV_{soll}$) abgibt, dessen Wert auf Null ist, wenn sein Eingangssignal kleiner als der zweite fest vorgegebene Wert (CVAN) ist und dessen Wert unverändert ist, wenn sein Eingangssignal grösser als der zweite fest vorgegebene Wert (CVAN) ist.

4. Elektronischer Sollwertgeber nach den Ansprüchen 1, 2 oder 3, dadurch gekennzeichnet, dass ein Funktionsgeber (1) vorgesehen ist, der bei Beginn eines Bremsvorganges (Bremsbefehl BB) einen zeitlich begrenzten, autonomen Sollwert (CV6) entsprechend einer vorgegebenen Funktion erzeugt und dass der autonome Sollwert (CV6) zusammen mit dem vorgegebenen Sollwert (CVFZS) einem weiteren Maximalauswahlschaltkreis (3) zugeführt wird, dessen Ausgangssignal, wie oben beschrieben, verglichen wird.

5. Elektronischer Sollwertgeber nach den Ansprüchen 1 bis 3, dadurch gekennzeichnet, dass der erste fest vorgegebene Wert (CV4) so festgesetzt ist, dass er einem Druck von ca. 0,3 bar entspricht.

6. Elektronischer Sollwertgeber nach Anspruch 4, dadurch gekennzeichnet, dass der Funktionsgeber (1) mehrere hintereinander geschaltete Zeitglieder (R1, C1; R4, C2; R7, C3) aufweist, deren Ausgänge logische Gatter (G1, G2, G3) steuern, die ihrerseits elektronische Schalter (T1, T2, T3) betätigen, wodurch das Teilerverhältnis eines Spannungsteilernetzwerkes (R10, R11, R12, R13) in Abhängigkeit des jeweils durchgeschalteten elektronischen Schalters (T1, T2 oder T3) veränderbar ist.

7. Elektronischer Sollwertgeber nach den Ansprüchen 3 und 4, dadurch gekennzeichnet, dass der Maximalauswahlschaltkreis (3, 6) zwei Operationsverstärker (V5, V6; V8, V9) aufweist, deren Ausgänge über je eine Diode (D4, D5; D6, D7) mit dem invertierenden Eingang des zugeordneten Verstärkers verbunden ist, wobei die entsprechenden Eingangsgrössen dem nicht-invertierenden Eingang der Verstärker zugeführt wird und wobei die Ausgänge (Kathoden) der Dioden (D4 und D5 bzw. D6 und D7) zu einem gemeinsamen Punkt verbunden sind, der den Ausgang des Maximalauswahlschaltkreises (3, 6) bildet.

8. Elektronischer Sollwertgeber nach den Ansprüchen 1 bis 3, dadurch gekennzeichnet, dass der Schwellwertschalter (5, 7) einen Operationsverstärker (V7; V10) aufweist, dessen invertierendem Eingang eine dem zweiten fest vorgegebenen Wert (CVAN) entsprechende Spannung und dessen nicht-invertierendem Eingang die zu vergleichende Spannung zugeführt wird, dass der Ausgang des Verstärkers (V7; V10) einem elektronischen Schalter (T4; T5) zugeführt wird, wobei einem Anschluss dieses Schalters (T4; T5) der durchzuschaltende Wert (CV4 bzw. CVS) zugeführt wird und dass der andere Ausgang des Schalters (T4; T5) den Ausgang des Schwellwertschalters (5, 7) bildet.

9. Elektronischer Sollwertgeber nach Anspruch 8 in Verbindung mit Anspruch 3, dadurch gekennzeichnet, dass der Ausgang des zweiten Schwellwertschalters (7) mit dem nicht-invertierenden Eingang eines rückgekoppelten Operationsverstärkers verbunden ist, wobei dieser Eingang über einen Widerstand (R24) mit Masse verbunden ist.

**Claims**

1. Electronic demand signal generator for electro-pneumatic brake systems in rail vehicles, a precontrol pressure ($C_v$ pressure) of the electro-pneumatic brake system being influenced by an electric demand signal (CVFZS or CV6) which is preset by the driver or by an automatic train control system, wherein the preset demand signal (CVFZS or CV6) is compared in a threshold switch (5, 7) with a first permanent value (CV4) and wherein the preset demand signal (CVFZS, CV6) is fed unchanged to the brake system as a function of this comparison if it is greater than the permanent value (CV4), or set to zero if it is smaller than the permanent value (CV4).

2. Electronic demand signal generator as defined in Claim 1, wherein the threshold switch (5, 7) compares the preset demand signal with a second permanent value (CVAN) which is between zero and the first permanent value (CV4) and wherein the preset demand signal (CVFZS) or CV6)

a) is adjusted to the level of the first permanent value (CV4) if the preset demand signal is between the first permanent value (CV4) and the second (CVAN),

b) is set to zero if the preset demand signal is between zero and the second permanent value (CVAN); and

c) is left unchanged if the preset demand signal is greater than the first permanent value (CV4).

3. Electronic demand signal generator as defined in Claim 1 or 2, wherein the preset demand signal (CVFZS or CV6) is delivered to a regulator (4) and a first threshold switch (5) simultaneously, the first threshold switch (5) supplying the values of zero or the level of the first permanent value (CV4) as a function of the comparison, wherein the outputs of the regulator (4) and of the first threshold switch (5) are delivered to a maximum selection circuit (6), whose output furnishes the higher of the two input signals (CVS2, CVS1), and wherein the output of the maximum selection circuit (6) is fed to a second threshold switch (7) which produces an output signal ($CV_{demand}$) whose value is zero when its input signal is smaller than the second permanent value (CVAN) and whose value is unchanged when its input signal is greater than the second permanent value (CVAN).

4. Electronic demand signal generator as defined in Claim 1, 2 or 3, wherein there is a function generator (1) which, at the start of a braking operation (brake command BB), produces an autonomous demand signal (CV6) of limited duration according to a preset function and wherein the autonomous demand signal (CV6) is delivered together with the preset demand signal (CVFZS) to a further maximum selection circuit (3) whose output signal is compared as described above.

5. Electronic demand signal generator as defined in Claims 1 to 3, wherein the first permanent value (CV4) is fixed in such a way that it corresponds to a pressure of about 0.3 bar.

6. Electronic demand signal generator as defined in Claim 4, wherein the function generator (1) contains several series-connected timing elements (R1, C1; R4, C2; R7, C3) whose outputs control logic gates (G1, G2, G3) which in turn actuate electronic switches (T1, T2, T3), allowing the division ratio of a voltage divider network (R10, R11, R12, R13) to be varied as a function of the electronic switch that is just on (T1, T2 or T3).

7. Electronic demand signal generator as defined in Claims 3 and 4, wherein the maximum selection circuit (3, 6) contains two operational amplifiers (V5, V6; V8, V9) whose outputs are connected via one diode each (D4, D5; D6, D7) to the inverting input of the associated amplifier, the corresponding input quantities being delivered to the non-inverting amplifier input, and the outputs (cathodes) of the diodes (D4 and D5, D6 and D7) being linked to a common point which forms the output of the maximum selection circuit (3, 6).

8. Electronic demand signal generator as defined in Claims 1 to 3, wherein the threshold switch (5, 7) contains an operational amplifier (V7; V10) whose inverting input receives a voltage corresponding to the second permanent value (CVAN) and whose non-inverting input receives the voltage that is to be compared, wherein the output of the amplifier (V7; V10) is fed to an electronic switch (T4; T5), one terminal of which receives the signal (CV4 or CVS) that is to be switched through, and wherein the other output of the switch (T4; T5) forms the output of the threshold switch (5, 7).

9. Electronic demand signal generator as defined in Claim 8 in conjunction with 'Claim 3, wherein the output of the second threshold switch (7) is connected to the non-inverting input of a positive-feedback operational amplifier, this input being connected to ground through a resistor (R24).

## Revendications

1. Générateur électronique de valeur de consigne pour installations de frein électropneumatiques de véhicules de chemins de fer, dans lesquelles une valeur électrique de consigne (CVFZS ou CV6) imposée par le mécanicien ou par un dispositif de conduite automatique, module une pression de précommande (pression C$_v$) de l'installation électropneumatique de freinage, caractérisée par le fait que la valeur de consigne imposée (CVFZS ou CV6) est comparée dans un commutateur à seuil (5, 7) avec une première valeur fixe choisie d'avance (CV4) et que, en fonction de cette comparaison, cette valeur imposée (CVFZS, CV6) est, soit transmise inchangée vers l'installation de frein si elle est plus grande que la valeur fixe choisie (CV4), soit ramenée à la valeur zéro si elle est inférieure à cette valeur fixe choisie (CV4).

2. Générateur électronique de valeur de consigne selon revendication 1, caractérisé par le fait que le commutateur à seuil (5, 7) compare la valeur imposée avec une deuxième valeur fixe choisie d'avance (CVAN) située entre zéro et la première valeur fixe choisie d'avance (CV4) et que la valeur imposée (CVFZS ou CV6)

a) est ramenée à la valeur de la première valeur fixe choisie d'avance (CV4) si cette valeur imposée est située entre la première (CV4) et la deuxième (CVAN) valeur fixe choisie d'avance,

b) est ramenée à zéro si elle est située entre zéro et la deuxième valeur fixe choisie d'avance (CVAN), et

c) reste inchangée si elle est supérieure à la première valeur fixe choisie d'avance (CV4).

3. Générateur électronique de valeur de consigne selon revendication 1 ou 2, caractérisé par le fait que la valeur imposée (CVFZS ou CV6) est transmise simultanément à un régulateur (4) et à un premier commutateur à seuil (5), de sorte que ce premier commutateur à seuil (5) restitue, en fonction de la comparaison, soit la valeur zéro, soit celle de la première valeur fixe choisie d'avance (CV4); que les sorties du régulateur (4) et du premier commutateur à seuil (5) sont reliées à un circuit de sélection à maximum (6) à la sortie duquel apparait le plus grand des deux signaux d'entrée (CVS2, CVS1) et que la sortie du circuit de sélection à maximum (6) est reliée à un deuxième commutateur à seuil (7) qui donne un signal de sortie (CV$_{soll}$) dont la valeur est zéro si son signal d'entrée est inférieur à la deuxième valeur choisie d'avance (CVAN) et reste inchangée si son signal d'entrée est supérieur à cette deuxième valeur choisie d'avance (CVAN).

4. Générateur électronique de valeur de consigne selon revendications 1, 2 ou 3, caractérisé par le fait qu'un transmetteur de fonction (1) est prévu qui, lors du début d'un cycle de freinage (ordre de freinage BB), génère une valeur de consigne (CV6) autonome, limitée dans le temps et correspondant à une fonction choisie d'avance, et que cette valeur de consigne autonome (CV6) est transmise en même temps que la valeur imposée (CVFZS) à un autre circuit de sélection à maximum (3), dont le signal de sortie est comparé comme il est décrit ci-dessus.

5. Générateur électronique de valeur de consigne selon revendications 1 à 3 caractérisé par le fait que la première valeur fixe choisie d'avance (CV4) est fixée de façon à correspondre à une pression d'environ 0,3 bar.

6. Générateur électronique de valeur de consigne selon revendication (4) caractérisé par le fait que le transmetteur de fonction (1) possède plusieurs temporisateurs (R1, C1; R4, C2; R7, C3) montés en série dont les sorties commandent des portes logiques (G1, G2, G3), actionnant à leur tour des commutateurs électroniques (T1, T2, T3) ce qui permet de varier le rapport de division d'un pont diviseur de tension (R10, R11, R12, R13), en fonction du commutateur électronique (T1, T2 ou T3) qui se trouve activé.

7. Générateur électronique de valeur de consigne selon revendications 3 et 4 caractérisé par le fait que le circuit de sélection à maximum (3, 6) possède deux amplificateurs d'opération (V5, V6; V8, V9) dont les sorties sont reliées chacune par une diode (D4, D5; D6, D7) avec l'entrée redressée de l'amplificateur correspondant, tandis que les grandeurs d'entrée correspondantes sont transmises aux entrées non redressées des amplificateurs, et que les sorties (cathodes) des diodes (D4 et D5, D6 et D7) sont reliées à un point commun qui constitue la sortie du circuit de sélection à maximum (3, 6).

8. Générateur électronique de valeur de consigne selon revendications 1 à 3 caractérisé par le fait que le commutateur à seuil (5, 7) possède un amplificateur d'opération (V7, V10) dont l'entrée redressée reçoit une tension correspondant à la deuxième valeur fixe choisie d'avance (CVAN) et dont l'entrée non redressée reçoit la tension à comparer; que la sortie de l'amplificateur (V7, V10) est reliée à un commutateur électronique (T4, T5), tandis que la valeur transitant (CV4 ou CVS) est transmise à une borne de ce commutateur (T4, T5) et que l'autre sortie du commutateur (T4, T5) constitue la sortie du commutateur à seuil (5, 7).

9. Générateur électronique de valeur de consigne selon revendication 8 caractérisé par le fait que la sortie du deuxième commutateur à seuil (7) est reliée avec l'entrée non redressée d'un amplificateur d'opération couplé en retour, tandis que cette entrée est reliée à la masse par une résistance (R 24).

Fig. 1

Fig. 2

Fig. 3a

Fig. 3b

0 037 853

Fig. 4

Fig. 5